# DEMANDE DE BREVET EUROPEEN

(11) **EP 4 534 170 A1**
(43) Date de publication de la demande: **09.04.2025**
(21) Numéro de dépôt: 24204600.1
(22) Date de dépôt: 04.10.2024
(51) Int. Cl.: B01D 21/06

(54) **DÉCANTEUR DE SÉPARATION SOLIDE/LIQUIDE ET PROCÉDÉ DE SÉPARATION SOLIDE/LIQUIDE ASSOCIÉ**

(30) Priorité: 05.10.2023 FR 2310685
(71) Demandeur: SUEZ International, 92040 Paris La Défense Cedex (FR)
(72) Inventeur: FONSECA, Pedro, 92040 PARIS LA DEFENSE CEDEX (FR); DUMOULIN, Laurence, 92040 PARIS LA DEFENSE CEDEX (FR); D'ELBÉE, Benjamine, 48011 BILBAO (ES); MARIOT, Quentin, 92040 PARIS LA DEFENSE CEDEX (FR); BREMOND, Olivier, 92040 PARIS LA DEFENSE CEDEX (FR); LECORNEUR, Alexandre, 92040 PARIS LA DEFENSE CEDEX (FR)
(74) Mandataire: Lavoix

(57) **Abrégé**

L'invention concerne un décanteur (1) de séparation solide/liquide comportant :
- un bassin (3) de décantation délimitant un volume de décantation (5) continu,
- une structure supérieure (30),
- un racleur (33) comprenant un bras racleur (36),
- des supports fixes (50) de la structure supérieure (30) faisant saillie à partir du fond (3A) du bassin de décantation dans le volume de décantation (5).

Les supports (50) sont décentrés et positionnés dans une enveloppe susceptible d'être balayée par le bras racleur (36) en l'absence du support.

Le décanteur comporte un système d'entrainement en rotation du racleur (33), configuré pour entrainer en rotation l'organe d'entrainement alternativement dans un premier sens et dans un deuxième sens, opposé au premier sens selon un parcours angulaire défini (a), borné par chaque support (50).

## Description

La présente invention concerne un décanteur de séparation solide/liquide du type comprenant :
- un bassin de décantation comprenant un fond et au moins une paroi externe, le fond et la paroi externe délimitant un volume de décantation continu,
- une structure supérieure disposée au-dessus du fond,
- un racleur s'étendant au moins en partie dans le volume de décantation, le racleur comportant un organe d'entrainement en rotation monté rotatif autour d'un axe vertical de rotation, le racleur comprenant au moins un bras racleur fixé à l'organe d'entrainement et faisant saillie radialement par rapport à l'axe vertical de rotation,
au moins un support fixe de la structure supérieure fixé à la structure supérieure, le ou chaque support faisant saillie à partir du fond dans le volume de décantation.

L'invention concerne également un procédé de séparation solide/liquide.

Les décanteurs de séparation solide/liquide font partie d'ouvrages de décantation effectuant une séparation liquide/solide pour traiter des eaux, en particulier des eaux usées, des eaux industrielles ou des eaux potables.

De manière générale, un décanteur comprend au moins une structure supérieure fixe pouvant comprendre des organes de gestion du flux hydraulique tels qu'une goulotte de circulation d'un fluide, un module lamellaire, des organes de répartition et/ou de dissipation d'énergie, et/ou pouvant porter des structures d'accessibilité à un utilisateur tel qu'une passerelle. Dans certains cas, la structure supérieure porte un racleur.

En effet, lorsque les eaux à traiter contiennent des matières lourdes pouvant être décantées, il est important de pouvoir extraire les solides sédimentés de l'ouvrage de décantation.

A cet effet, le racleur est équipé de bras racleurs entrainés en rotation par un organe d'entrainement et configurés pour racler les solides sédimentés sur le fond du décanteur à l'aide d'organes de raclage et les entrainer vers un point d'extraction de l'ouvrage de décantation.

Le mouvement local des solides sédimentés est initié par le passage du racleur et se fait vers les zones les moins concentrées. Il y a donc une circulation des solides sédimentés depuis les zones de sédimentation vers le point d'extraction de l'ouvrage.

On connait de US 3 977 974, un bassin circulaire de séparation solide/liquide divisé en une pluralité de zones angulaires de traitement d'un effluent. Une zone de sédimentation est destinée à recevoir des solides décantés, qui sont ensuite collectés et extraits à l'aide d'un racleur de la zone de sédimentation. Le racleur comprend un bras mobile sur lequel sont suspendus des organes de raclage. Le bras est mobile en rotation autour d'un arbre central, afin que les organes de raclage parcourent la zone de sédimentation.

Le bras mobile et les structures supérieures fixes sont notamment supportés au centre du bassin ainsi que par les bords périphériques du bassin, à l'aide de roues ou d'un ensemble à roulement, afin de ne pas gêner le déplacement des organes de raclage.

Toutefois, une telle structure crée des contraintes en termes de conception mécanique et génie civil, notamment au niveau des parois du bassin.

Un but de l'invention est de proposer un décanteur de séparation solide/liquide robuste et plus simple à fabriquer en termes de génie civil, tout en assurant de manière efficace le raclage des solides sédimentés.

A cet effet, l'invention a pour objet un décanteur de séparation solide/liquide du type précité, dans lequel le ou chaque support est décentré par rapport à l'axe vertical de rotation et est positionné au moins en partie dans une enveloppe qui serait susceptible d'être balayée dans le volume de décantation par l'au moins un bras racleur en l'absence du ou de chaque support,
et dans lequel le décanteur comporte un système d'entrainement en rotation du racleur, configuré pour entrainer en rotation l'organe d'entrainement autour de l'axe vertical de rotation alternativement dans un premier sens de rotation et dans un deuxième sens de rotation, opposé au premier sens selon un parcours angulaire défini, borné par le ou chaque support.

Le ou les supports fixes supportent les structures supérieures fixes et simplifient la conception de l'ouvrage de décantation, assurant un support intermédiaire au support central et/ou aux supports supérieurs et périphériques usuellement employés pour ce type d'ouvrage.

De plus, le racleur étant entrainé en rotation alternativement entre les supports fixes, un balayage efficace du fond du bassin par le ou chaque bras racleur est maintenu.

Suivant d'autres aspects avantageux de l'invention, le décanteur comprend une ou plusieurs des caractéristiques suivantes, prises isolément ou suivant toutes les combinaisons techniquement possibles :
- le ou chaque support est situé à l'écart radialement de l'organe d'entrainement et à l'écart radialement de l'au moins une paroi externe du bassin ;
- dans au moins une section dans un plan perpendiculaire à l'axe vertical de rotation, le ou chaque support est situé totalement à l'écart d'un contour périphérique du volume de décantation continu ;
- le décanteur comprend un système motorisé d'entrainement en rotation de l'organe d'entrainement autour de l'axe vertical ;
- la structure supérieure comprend un organe de gestion du flux hydraulique ou une passerelle d'accès à un opérateur ;
- l'organe de gestion du flux hydraulique est choisi parmi un canal de circulation d'un fluide, un module lamellaire, et un organe de répartition et/ou de dissipation d'énergie ;
- l'au moins un support de la structure supérieure est un pilier s'étendant selon une direction parallèle à l'axe vertical ;
- le racleur comprend au moins un organe de raclage lié à l'au moins un bras racleur, le ou chaque organe de raclage s'étendant entre l'arbre d'entrainement et l'au moins une paroi externe du bassin ;
- le racleur comprend un nombre d'organes de raclage compris entre 1 et 15 par bras racleur, de préférence supérieur à 2, espacés radialement les uns des autres le long du bras racleur ;
- chaque organe de raclage est configuré pour balayer un volume situé à l'écart et sans contact avec le ou chaque support lors de l'entrainement en rotation alternatif du racleur ;
- les organes de raclage sont mobiles en translation selon une direction parallèle à l'axe vertical de rotation ;
- le fond du bassin présente un contour circulaire, en projection dans un plan perpendiculaire à l'axe vertical de rotation, la paroi externe du bassin définissant une surface cylindrique ;
- le racleur comprend un nombre de bras racleurs au moins égal au nombre de support(s) de la structure supérieure, les bras racleurs étant agencés angulairement autour de l'arbre d'entrainement ;
- le parcours angulaire en degrés du ou de chaque bras racleur est sensiblement inférieur à R, R étant égal à 360 divisé par le nombre de support(s) de la structure supérieure du décanteur.

L'invention concerne également un procédé de séparation solide/liquide à l'aide d'un décanteur solide/liquide tel que décrit ci-dessus, le procédé comprenant les étapes suivantes :
- amenée de fluide à clarifier dans le volume de décantation du bassin de décantation d'un décanteur solide/liquide tel que décrit ci-dessus ;
- mise en rotation de l'organe d'entrainement en rotation dans le premier sens ;
- entrainement de chaque bras du racleur en rotation dans le premier sens autour de l'axe de rotation sur un parcours angulaire jusqu'au voisinage du support ;
- à l'extrémité du parcours angulaire, inversion du mouvement rotatif de l'organe d'entrainement en rotation pour mettre en rotation l'organe d'entrainement dans le deuxième sens opposé au premier sens ; et
- entrainement de chaque bras du racleur en rotation autour de l'axe de rotation dans le deuxième sens.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue en coupe partielle selon un plan vertical médian d'un décanteur possédant quatre supports fixes,
[Fig. 2] la figure 2 est une vue schématique de dessus du décanteur de la figure 1 possédant des organes de raclage plats,
[Fig. 3] la figure 3 est une vue schématique de dessus du décanteur de la figure 1 possédant des organes de raclage de section en losange,
[Fig. 4] la figure 4 est une vue en coupe partielle selon un plan vertical médian d'un décanteur possédant deux supports fixes,
[Fig. 5] la figure 5 est une vue schématique de dessus du décanteur de la figure 4 possédant des organes de raclage plats, et
[Fig. 6] la figure 6 est une vue schématique de dessus du décanteur de la figure 4 possédant des organes de raclage de section en losange.

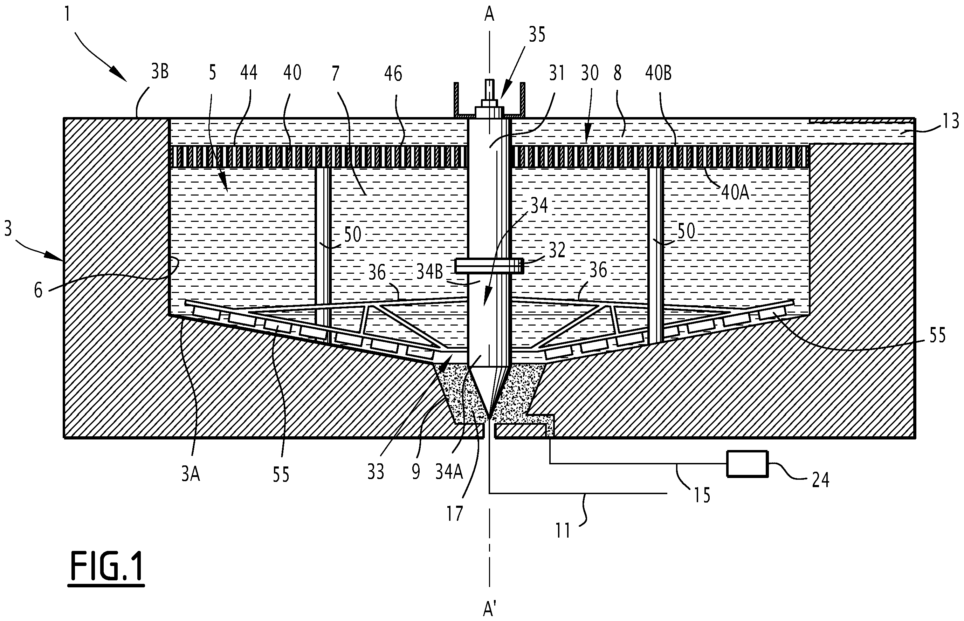

Un décanteur 1 de séparation solide/liquide selon l'invention est illustré schématiquement sur la figure 1.

Le décanteur 1 est destiné à être disposé dans une unité de traitement de fluides ou des eaux pour recevoir des fluides tels que des eaux usées, des eaux industrielles, ou des eaux potables en vue de les traiter pour obtenir une eau clarifiée.

En référence à la figure 1, le décanteur 1 comporte un bassin 3 de décantation comprenant un fond 3A et au moins une paroi externe 3B.

Le fond 3A et la paroi externe 3B délimitent entre eux un volume 5 de décantation, qui s'ouvre vers le haut dans l'atmosphère. Le fond 3A présente un bord périphérique 6.

Le volume de décantation 5 est un volume continu. En particulier, aucune interruption du volume de décantation 5 n'est présente en se déplaçant autour d'un axe central A-A' du bassin 3.

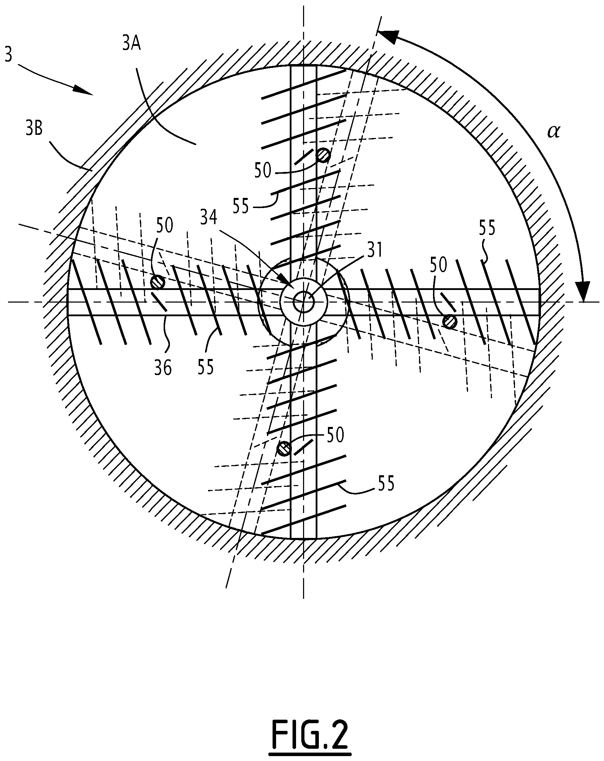

Selon l'exemple représenté dans les figures 1 et 2, le bassin 3 présente un contour circulaire autour de l'axe central A-A', la paroi externe 3B du bassin 3 étant une surface cylindrique.

Les parois externes 3B sont ici verticales.

En variante, le contour du bassin 3 présente n'importe quelle autre géométrie, telle qu'une forme rectangulaire, en particulier carrée.

En variante encore, le bassin 3 ne présente pas un contour circulaire faisant une révolution complète de 360° mais présente un contour formant un arc de cercle compris entre 30° et 360°. Le volume de décantation 5 est avantageusement continu sur l'étendue angulaire de l'arc de cercle.

Le fond 3A du bassin 3 est avantageusement incliné vers le centre du bassin 3.

Le volume 5 de décantation est propre à recevoir un fluide 7, et plus particulièrement une eau, à clarifier, contenant des solides, notamment des matières en suspension, et des liquides, pour le séparer en un fluide clarifié 8 présentant une teneur diminuée en solides et en des solides sédimentés destinés à être extraits du volume 5 de décantation et traités.

Les solides sédimentés sont par exemple des boues.

A cet effet, le bassin 3 comprend un cône 9 de collecte des solides sédimentés, disposé au point le plus bas du fond 3A, tel que visible sur la figure 1.

Le bassin 3 comporte en outre au moins une entrée 11 de fluide à clarifier 7, au moins une évacuation 13 de fluide clarifié 8, et au moins une sortie 15 d'évacuation de solides sédimentés 17.

Le fond 3A du bassin 3 comporte ici au moins un pan incliné depuis son bord périphérique 6 au niveau de la paroi externe 3B vers le cône 9. La valeur de la pente du fond 3A est par exemple comprise entre 5% et 25%.

Le volume 5 de décantation débouche en outre vers le bas dans le cône 9, pour collecter les solides sédimentés 17.

Le volume 5 est par exemple compris entre 20 m³ et 5000 m³.

Dans un mode de réalisation, représenté sur la figure 1, l'entrée 11 de fluide à clarifier 7 est une conduite verticale d'alimentation centrale faisant saillie par rapport au fond 3A du bassin 3.

L'évacuation 13 de fluide clarifié 8 s'étend par exemple latéralement à travers une paroi externe 3B du bassin 3.

La sortie 15 d'évacuation de solides sédimentés 17 s'ouvre au fond du cône 9. Elle est raccordée à une pompe 24 d'évacuation des solides sédimentés 17, en vue de leur traitement.

Le décanteur 1 comporte également une structure supérieure fixe 30 disposée au-dessus du fond 3A du bassin 3.

La structure supérieure 30 est supportée par au moins un support fixe 50, et avantageusement, par la paroi externe 3B du bassin 3 et/ou par un support fixe central 31, le ou chaque support fixe 50 étant disposé entre le support fixe central 31 et la paroi externe 3B du bassin 3.

Le support fixe central 31 s'étend en saillie au centre du bassin 3, depuis le fond 3A.

La structure supérieure 30 comprend par exemple un organe de gestion du flux hydraulique.

La structure supérieure 30 est par exemple disposée au moins en partie à l'intérieur du volume de décantation 5 et de préférence destinée à être au moins en partie immergée dans le fluide à traiter.

L'organe de gestion du flux hydraulique est par exemple choisi parmi une goulotte de circulation d'un fluide accompagnée d'un module lamellaire, et/ou un organe de répartition et/ou de dissipation d'énergie.

Dans l'exemple représenté sur la figure 1, la structure supérieure 30 comprend au moins un module lamellaire 40.

Le décanteur 1 comprend également un racleur 33 porté par exemple par la structure supérieure 30 et un système motorisé 35 d'entrainement en rotation du racleur.

Le racleur 33 comporte un organe d'entrainement en rotation, en particulier un arbre 34 d'entrainement s'étendant verticalement entre une extrémité inférieure 34A et une extrémité supérieure 34B.

Dans certains exemples de réalisation, non représentés sur les figures, le racleur 33 comprend un pont s'étendant au-dessus du bassin 3, le pont étant monté rotatif conjointement à l'arbre 34 d'entrainement.

L'arbre 34 d'entrainement est monté rotatif autour d'un axe vertical de rotation et est entrainé en rotation par le système motorisé 35.

La structure supérieure 30 porte par exemple le système motorisé 35 d'entrainement en rotation de l'arbre 34 autour de l'axe vertical de rotation.

En revanche, le système d'entrainement peut également être situé au-dessus de l'organe d'entrainement 34 ou encore sur la paroi externe 3B du bassin 3.

L'arbre 34 d'entrainement est par exemple monté rotatif autour du support fixe central 31.

Par exemple, l'arbre 34 s'étend autour du support fixe central 31 sur une portion inférieure du support fixe central 31, jusqu'à une collerette annulaire 32.

Ainsi, un découplage est réalisé entre l'arbre 34 et le support fixe central 31 qui reste fixe lorsque l'arbre 34 est entrainé en rotation autour de l'axe vertical de rotation.

Dans l'exemple représenté, l'axe vertical de rotation de l'arbre 34 est confondu avec l'axe A-A'.

L'arbre 34 est entrainé à une vitesse généralement comprise entre 0,03 tours par minute et 0,5 tours par minute.

Le racleur 33 comprend également au moins un bras racleur 36 faisant saillie latéralement par rapport à l'arbre 34 d'entrainement.

Le ou chaque bras racleur 36 s'étend selon une direction d'extension au-dessus du fond 3A du bassin 3 et entre l'arbre 34 d'entrainement et la paroi externe 3B.

Dans l'exemple représenté, la direction d'extension de chaque bras racleur 36 correspond à une direction radiale.

Lorsque le décanteur 1 comprend plus d'un bras racleur 36, chaque bras racleur 36 est agencé angulairement autour de l'arbre 34 d'entrainement.

Comme précédemment mentionné, dans l'exemple représenté sur la figure 1, la structure supérieure 30 comprend des modules lamellaires 40.

Les modules lamellaires 40 couvrent avantageusement au moins une partie de la surface horizontale du volume 5 du bassin 3 autour de l'axe central A-A'.

Chaque module lamellaire 40 est par exemple formé d'une pluralité de lamelles 44, de préférence inclinées par rapport à la verticale, qui délimitent entre elles des passages traversants 46 depuis une surface inférieure 40A du module 40 vers une surface supérieure 40B du module 40.

Dans l'exemple de la figure 1, le module lamellaire 40 est formé d'une pluralité d'éléments tubulaires débouchant vers le bas dans la surface inférieure 40A du module 40 et vers le haut dans la surface supérieure 40B du module 40.

Les modules lamellaires 40 contribuent à la séparation solide-liquide en captant au moins en partie les solides pour leur permettre de sédimenter, alors que les fluides clarifiés 8 peuvent remonter à travers le module lamellaire 40.

A cet effet, l'entrée 11 de fluide à clarifier 7 est située de préférence sous les modules lamellaires 40.

L'évacuation 13 de fluide clarifié 8 est située au-dessus des modules lamellaires 40, notamment proche de la surface du bassin 3.

Les passages intérieurs 46 délimités au sein du module lamellaire constituent donc un obstacle pour les éléments solides contenus dans le fluide à clarifier 7. Ceux-ci sont donc préférentiellement maintenus sous le module lamellaire 40. Au contraire, le fluide clarifié 8 est propre à remonter et à cheminer à travers le module lamellaire 40.

Ainsi, la concentration en solides maintenus sous le module lamellaire 40 est propre à augmenter, provoquant une sédimentation des solides vers le fond 3A du bassin 3.

Afin de supporter les structures supérieures fixes, le décanteur 1 comprend au moins un support fixe 50 de la structure supérieure 30.

Chaque support 50 fait saillie verticalement à partir du fond 3A dans le volume 5 de décantation en étant situé à l'écart radialement de l'arbre 34 d'entrainement et à l'écart radialement de l'au moins une paroi externe 3B du bassin 3.

En particulier, chaque support 50 est décentré par rapport à l'axe vertical de rotation et s'étend au moins en partie dans une enveloppe susceptible d'être balayée dans le volume de décantation 5 par l'au moins un bras racleur 36, en l'absence du ou de chaque support 50.

L'enveloppe dans lequel le ou chaque support 50 s'étend est définie par chaque point du volume de décantation 5 qui serait balayé lors d'une rotation d'un bras racleur 36 autour de l'axe vertical de rotation A-A', sur toute la course possible du bras racleur 36 en l'absence du ou de chaque support 50.

Par ailleurs, en section dans au moins un plan perpendiculaire à l'axe vertical de rotation A-A', le ou chaque support 50 est situé totalement à l'écart d'un contour périphérique du volume de décantation 5 continu.

Dans l'exemple représenté sur les figures 1 à 3, le décanteur comprend au moins quatre supports fixes 50 répartis angulairement dans le bassin 3.

Les supports fixes 50 sont par exemple angulairement répartis de manière symétrique dans le bassin 3 et supportent par exemple les modules lamellaires 40.

Dans l'exemple représenté, les supports fixes 50 se situent à égale distance de l'arbre 34.

Les supports fixes 50 sont par exemple des piliers s'étendant selon une direction parallèle à l'axe central A-A' et présentant une section, prise en coupe selon un plan perpendiculaire à l'axe vertical, par exemple circulaire et/ou rectangulaire.

Les supports fixes 50 simplifient la conception du décanteur 1, en diminuant les contraintes de génie civil sur les parois du bassin 3, tout en assurant un support robuste des structures supérieures 30, même lors d'intempéries.

Le racleur 33 comprend un nombre de bras racleurs 36 au moins égal au nombre de support(s) fixe(s) 50 de la structure supérieure 30.

Le parcours angulaire α en degrés du ou de chaque bras racleur est sensiblement inférieur à R, R étant égal à 360 divisé par le nombre de support(s) 50 de la structure supérieure 30 du décanteur 1.

Afin d'assurer un raclage efficace du fond 3A du bassin 3, le racleur 33 comprend avantageusement au moins un organe de raclage, et plus particulièrement au moins un organe de raclage 55 lié à l'au moins un bras racleur 36.

Les organes de raclage 55 sont par exemple fixés ou suspendus aux bras racleurs 36.

Le ou chaque organe de raclage 55 se situe sur un bras racleur 36 entre l'arbre 34 d'entrainement et l'au moins une paroi externe 3B du bassin 3.

Dans l'exemple, chaque bras racleur 36 comprend une pluralité d'organes de raclage 55, radialement espacés les uns des autres le long des bras racleurs 36 en se déplaçant le long du bras racleur 36.

Le ou chaque organe de raclage 55 est situé à une distance comprise entre 0,5 cm et 2 cm au-dessus du fond 3A du bassin, de préférence comprise entre 0,5 cm et 1 cm.

Par exemple, le ou chaque organe de raclage 55 est fixé ou suspendu au bras racleur 36 à une distance comprise entre 0,5 cm et 2 cm au-dessus du fond 3A du bassin, de préférence comprise entre 0,5 cm et 1 cm.

Les organes de raclage 55 sont configurés pour racler les solides sédimentés 17 sur le fond 3A et les entrainer vers le cône 9.

Les mouvements locaux des organes de raclage 55 créent un gradient de concentration des solides sédimentés 17 qui libère un seuil d'écoulement et les solides sédimentés s'écoulent alors naturellement vers le cône 9.

Dans l'exemple de la figure 1, les organes de raclage 55 présentent une géométrie parallélépipédique. En revanche, comme il sera décrit plus en détails ultérieurement, les organes de raclage 55 ne sont pas limités à des parallélépipèdes mais peuvent présenter d'autres formes.

Chaque organe de raclage 55 est configuré pour balayer un volume situé à l'écart et sans contact avec le ou chaque support fixe 50 lors de l'entrainement en rotation du racleur 33.

A cet effet, le système motorisé 35 comporte une unité de commande configurée pour entraîner en rotation l'arbre 34 et le ou chaque bras racleur 36 autour de l'arbre 34 d'entrainement alternativement dans un premier sens de rotation et dans un deuxième sens de rotation, opposé au premier sens, selon un parcours angulaire défini α, entre le ou chaque support fixe 50.

Avantageusement, chaque organe de raclage 55 susceptible d'interférer avec un support 50 est positionné sur le bras 36 de façon à optimiser le raclage du fond 3A du bassin 3, sans interférer avec le support 50.

Par « susceptible d'interférer avec un support » il est entendu que sans précaution particulière envisagée, il serait possible que lesdits organes de raclage 55 susceptibles d'interférer avec un support 50, rencontrent et touchent un support 50 sur leur parcours angulaire α.

Ainsi, par exemple, les organes de raclage 55 dont la distance à l'arbre 34 est proche de la distance d'au moins un support 50 à l'arbre 34, définis comme « susceptibles d'interférer avec un support 50 », présentent une géométrie et/ou une inclinaison adaptée de manière à optimiser le raclage de la surface du fond 3A, sans pour autant entrer en collision avec un support 50.

Le racleur 33 comprend par exemple un nombre d'organes de raclage 55 compris entre 1 et 15 par bras racleur 36, de préférence supérieur à 2.

Une telle proportion d'organes de raclage 55 par bras racleur 36 permet d'assurer un raclage efficace d'une grande partie de la surface du fond 3A du bassin 3.

Dans un mode de réalisation, les organes de raclage 55 sont mobiles en translation selon une direction parallèle à l'axe vertical de rotation.

La distance séparant chaque organe de raclage 55 du fond 3A du bassin 3 est par exemple réglée en fonction de la configuration du racleur 33, ou bien en fonction de la taille et/ou de la quantité des solides sédimentés 17 raclés.

Les organes de raclage 55 sont réalisés en un matériau rigide, par exemple en caoutchouc renforcé, tel que du styrène-butadiène armé ou d'autres matériaux plastiques compatibles avec le fluide à traiter. Ils sont par exemple formés de bavettes.

En variante, les organes de raclage 55 sont réalisés en métal, par exemple sous forme de lames métalliques.

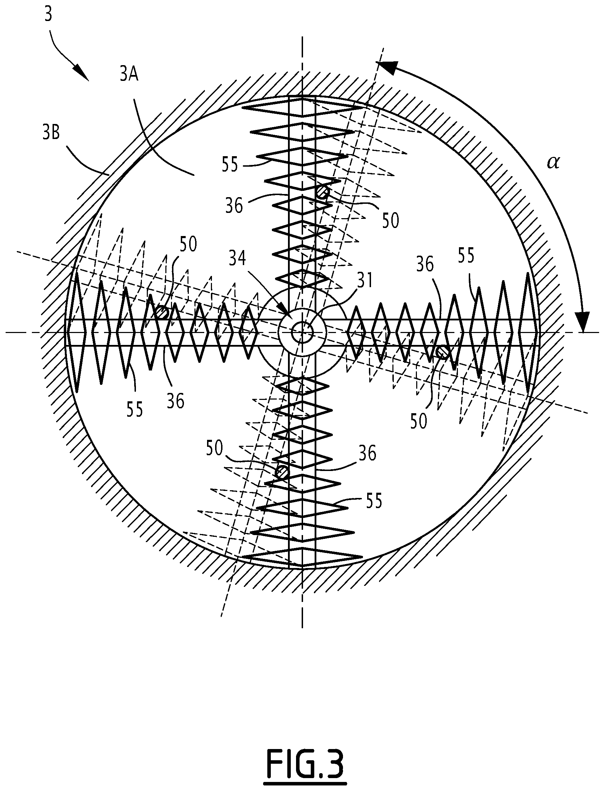

Les exemples représentés sur les figures 2 et 3 vont maintenant être décrits plus en détails.

Les figures 2 et 3 sont des représentations schématiques du décanteur 1 de la figure 1, prises en coupe selon un plan sensiblement horizontal et perpendiculaire à l'axe central A-A'.

Sur chaque figure, les traits pleins correspondent à une position initiale des bras racleurs 36 en début de parcours angulaire α, et les traits en pointillés correspondent à une position finale des bras racleurs 36, arrivés en fin de parcours angulaire α dans un premier sens de parcours.

Il est entendu que le parcours angulaire α est parcouru alternativement dans le premier sens de parcours et dans le deuxième sens de parcours.

Dans l'exemple de ces figures, le bassin 3 présente un contour circulaire.

Le décanteur 1 de la figure 1 comprend au moins quatre supports 50, le racleur 33 comprend au moins quatre bras racleurs 36.

Dans l'exemple représenté, le racleur 33 comprend exactement quatre bras racleurs 36.

Chaque bras racleur 36 effectue alors un parcours angulaire α inférieur à 90°.

Notamment, chaque bras racleur 36 effectue un parcours angulaire α sensiblement inférieur ou égal à 90° moins l'espace angulaire maximal occupé par un support fixe 50.

Dans l'exemple de la figure 2, les organes de raclage 55 sont des lames pleines parallélépipédiques inclinées par rapport à la direction radiale d'un angle par exemple compris entre 5° et 80°, en particulier entre 5° et 50°.

Dans l'exemple de la figure 3, les organes de raclage 55 présentent une section en losange dans le plan horizontal.

Par exemple, la petite diagonale du losange formé par la section des organes de raclage 55 dans le plan de coupe s'étend radialement.

En variante, non représentée, la petite diagonale du losange formé dans le plan de coupe forme un angle non nul avec la direction radiale.

Un organe de raclage 55 se situant proche de l'arbre 34 balaye un périmètre autour de l'arbre 34 inférieur au périmètre balayé par un organe de raclage 55 étant plus éloignée de l'arbre 34.

A cet effet, plus les organes de raclage 55 d'un bras racleur 36 sont radialement éloignés de l'arbre 34, plus ils présentent une largeur importante, prise en projection selon un plan perpendiculaire à la direction d'extension dudit bras racleur 36, à l'exception des organes de raclage 55 susceptibles d'interférer avec un support 50.

Afin d'accompagner l'inclinaison du fond 3A du bassin 3, les organes de raclage 55 sont avantageusement de hauteurs différentes, prise parallèlement à l'axe central A-A'.

Un procédé de séparation solide/liquide à l'aide d'un décanteur 1 tel que décrit plus haut va maintenant être décrit en détails.

Une quantité de fluide à décanter 7 est amenée dans le volume 5 du bassin 3 de décantation.

Par exemple, le fluide à décanter 7 est amené dans le bassin 3 par l'intermédiaire de l'entrée 11.

Comme indiqué précédemment, au moins une partie des solides contenus dans le fluide à clarifier 7, en particulier les matières en suspension, est retenue en dessous du ou de chaque module lamellaire 40. Au contraire, le fluide clarifié 8 remonte à travers les passages 46 entre les lamelles 44 et s'évacue en continu via l'évacuation 13 de fluide clarifié 8.

Les solides maintenus sous le ou les modules lamellaires 40 sédimentent et se déposent progressivement sur le fond 3A du bassin.

L'arbre 34 d'entraînement est mis en rotation, par le système motorisé 35, dans le premier sens pour entrainer en rotation le racleur 33 autour de son axe de rotation.

Chaque bras racleur 36 est conjointement entraîné en rotation dans le premier sens autour de l'axe de rotation sur une course angulaire jusqu'au voisinage d'un support fixe 50.

Chaque organe de raclage 55 racle alors les solides sédimentés 17 déposés au fond 3A du bassin 3 pour les entrainer vers le cône 9.

Le cône 9 collecte les solides sédimentés 17, qui sont évacués par intermittence ou continûment par la sortie d'évacuation 15.

A l'extrémité du parcours angulaire α, le mouvement rotatif de l'arbre 34 d'entrainement et du racleur 33 est inversé par l'unité de commande pour mettre en rotation l'arbre 34 d'entrainement dans le deuxième sens, opposé au premier sens.

Dans ce mode de réalisation, le parcours angulaire α est notamment inférieur à 90°.

Chaque bras racleur 36 est alors entrainé en rotation autour de l'axe de rotation dans le deuxième sens.

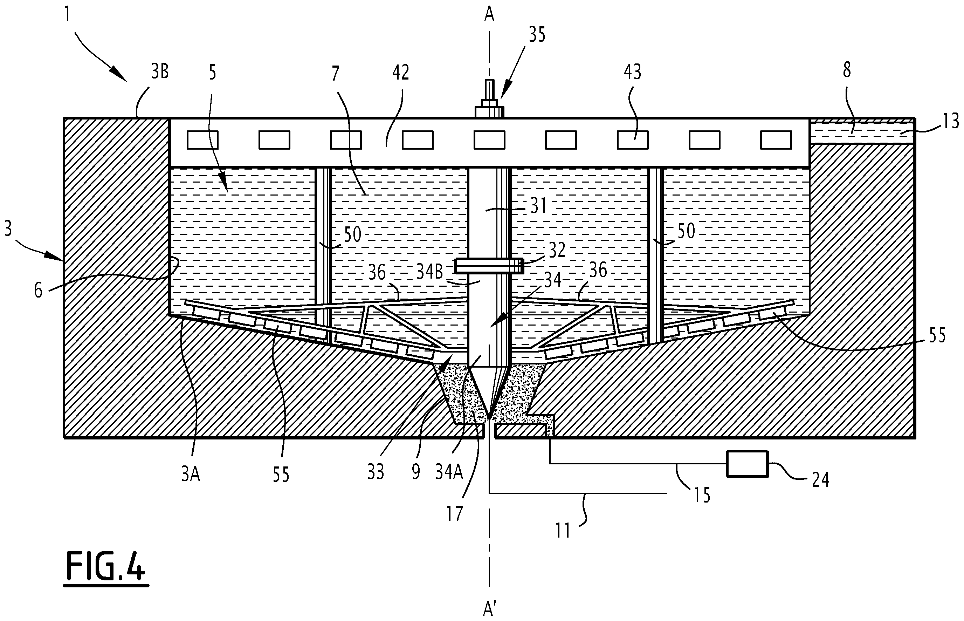

Un second mode de réalisation, représenté sur les figures 4 à 6, va maintenant être décrit.

A l'exception des caractéristiques décrites ci-après, le décanteur 1 est similaire au décanteur 1 du premier mode de réalisation, représenté sur les figures 1 à 3.

La structure supérieure 30 ne comprend plus de module lamellaire 40 mais comprend un canal de circulation 42.

Le canal de circulation 42 peut être une passerelle adaptée à la circulation d'utilisateurs ou encore un canal adapté à la circulation d'un fluide.

Dans l'exemple représenté, le canal 42 s'étend au-dessus du bassin 3 et lie deux parties diamétralement opposées par rapport à l'axe central A-A' de la paroi externe 3B du bassin 3.

Le canal 42 est par exemple destiné à la circulation du fluide à clarifier 7 ou du fluide clarifié 8.

A cet effet, le canal 42 comprend des ouvertures 43 autorisant la circulation du fluide à l'intérieur du canal 42.

Le décanteur 1 comprend au moins deux supports fixes 50.

Les supports fixes 50 sont par exemple diamétralement opposés et supportent par exemple le canal 42.

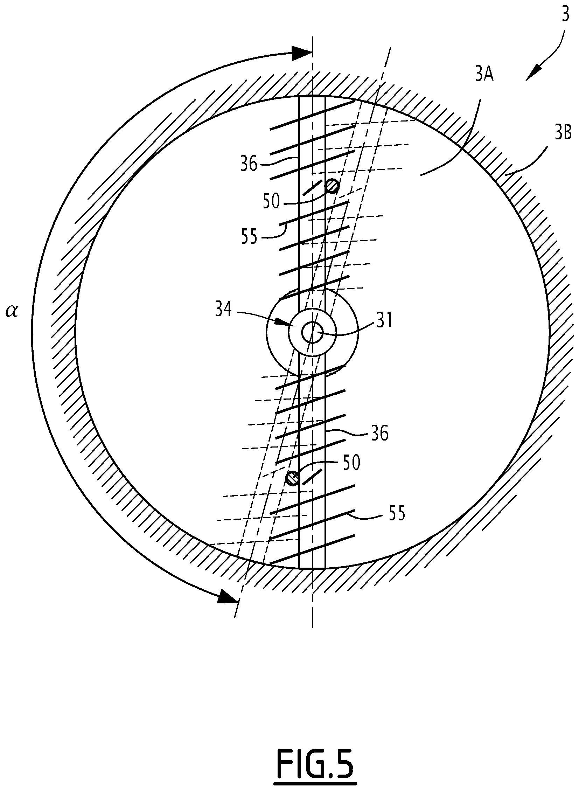

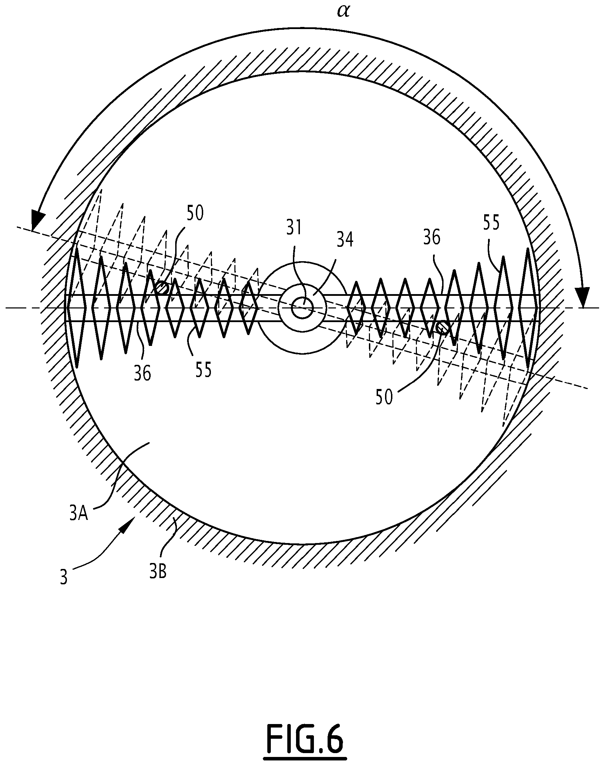

Les exemples représentés sur les figures 5 et 6 vont maintenant être décrits plus en détails.

Les figures 5 et 6 sont des représentations schématiques du décanteur 1 de la figure 4, prises en coupe selon un plan sensiblement horizontal et perpendiculaire à l'axe central A-A'.

Sur chaque figure, les traits pleins correspondent à une position initiale des bras racleurs 36 en début de parcours angulaire α, et les traits en pointillés correspondent à une position finale des bras racleurs 36, arrivés en fin de parcours angulaire α dans un premier sens de parcours.

Il est entendu que le parcours angulaire α est parcouru alternativement dans le premier sens de parcours et dans le deuxième sens de parcours.

Dans l'exemple de ces figures, le bassin 3 présente un contour circulaire.

Le décanteur 1 de la figure 4 comprenant deux supports fixes 50, le racleur 33 comprend au moins deux bras racleurs 36.

Dans l'exemple représenté, le racleur 33 comprend exactement deux bras racleurs 36.

Chaque bras racleur 36 effectue alors un parcours angulaire α inférieur à 180°.

Notamment, chaque bras racleur 36 effectue un parcours angulaire α inférieur ou égal à 180° moins l'espace angulaire maximal occupé par un support fixe 50.

Dans l'exemple de la figure 5, les organes de raclage 55 sont des lames pleines parallélépipédiques inclinées par rapport à la direction radiale d'un angle par exemple compris entre 5° et 80°, en particulier compris entre 5° et 50°.

Dans l'exemple de la figure 6, les organes de raclage 55 présentent une section en losange dans le plan horizontal.

Par exemple, la petite diagonale du losange formé dans le plan de coupe forme un angle non nul avec la direction radiale.

Le procédé de séparation solide/liquide à l'aide d'un tel décanteur 1 est similaire à celui décrit en détails ci-dessus, à l'exception de la valeur du parcours angulaire α.

En effet, dans ce second mode de réalisation, le parcours angulaire α est notamment sensiblement inférieur à 180°.

Plusieurs variantes des modes de réalisation décrits ci-dessus vont maintenant être décrites.

En variante, ou en complément des précédents modes de réalisation, l'entrée 11 de fluide à clarifier 7 débouche latéralement dans une paroi externe 3B du bassin 3.

L'évacuation 13 de fluide clarifié 8 s'étend alors avantageusement à l'opposé de l'entrée 11 de fluide à clarifier 7 par rapport à l'axe A-A'. Elle comporte par exemple une évacuation par débordement au-dessus de la paroi externe 3B du bassin 3.

Dans le cas où le décanteur 1 comprend une alimentation par une canalisation centrale, la structure supérieure 30 peut comprendre également un organe de répartition et/ou de dissipation d'énergie agencé autour du support central 31.

L'organe de répartition et/ou de dissipation d'énergie est par exemple une jupe de répartition cylindrique (aussi appelée « clifford »).

L'organe de répartition et/ou de dissipation d'énergie est destiné à assurer la bonne répartition du flux de solides sédimentés 17 à l'intérieur du décanteur 1 pour obtenir les champs de vitesse souhaités pour les fluides 7 circulant dans le bassin 3.

Dans une autre variante, non représentée, chaque bras racleur 36 ne s'étend pas selon une direction radiale au-dessus du fond 3A du bassin 3 entre l'arbre 34 d'entrainement et la paroi externe 3B, mais s'étend au-dessus du fond 3A de manière courbée entre l'arbre 34 et la paroi externe 3B.

Dans une variante, non représentée, les supports 50 ne se situent pas à égale distance de l'arbre 34, mais un, des, ou tous les support(s) 50 se situe(nt) à des distances différentes de l'arbre 34.

Encore dans une variante, afin d'accompagner l'inclinaison du fond 3A du bassin 3, les organes de raclage 55 présentent une hauteur identique, prise parallèlement à l'axe central A-A', et la partie des bras racleurs 36 sur laquelle sont fixés les organes de raclage 55 ne s'étend pas selon un plan horizontal mais de manière inclinée vers le centre du bassin 3.

Avantageusement, l'angle d'inclinaison de la partie des bras racleurs 36 sur laquelle sont fixées les organes de raclage 55 est sensiblement égal à l'angle d'inclinaison du fond 3A du bassin 3.

Dans un troisième mode de réalisation, non représenté, au moins un bras racleur 36 comprend une buse d'aspiration des solides sédimentés 17. Le racleur 33 a alors la capacité de produire une aspiration embarquée vers le centre du bassin 3. L'aspiration des solides sédimentés 17 est notamment utile lorsque les solides sédimentés 17 sont restés longtemps sur le fond 3A du bassin 3.

Dans les exemples précédents, le parcours angulaire α effectué par chaque bras racleur 36 est par exemple déterminée au préalable. L'arbre 34 d'entrainement est alors configuré pour exercer une rotation d'une valeur prédéterminée.

En variante, le décanteur 1 comprend un système de détection d'obstacles entrainant l'inversion du mouvement rotatif de l'arbre 34 lorsqu'un bras racleur s'approche à une distance prédéterminée d'un support 50.

En variante encore, l'organe d'entrainement 34 en rotation n'est pas un arbre 34 central mais une cage tournante entrainée en rotation en périphérie du bassin 3.

Les décanteurs 1 décrits dans ces différents modes de réalisation, et leurs variantes associées, présentent d'une part une conception facilitée, et d'autre part une robustesse supérieure aux ouvrages présentés dans la littérature.

En effet, les supports fixes 50 permettent de supporter les structures supérieures fixes 30 de manière fiable, même lors d'intempéries, en limitant la charge s'appliquant sur la maçonnerie des parois du bassin.

De plus, les supports 50 facilitent la conception du décanteur 1 en ce qu'ils évitent la conception de supports supérieurs venant se raccorder aux parois externes du bassin pour soutenir les structures supérieures, afin de ne pas gêner la course angulaire des bras racleurs.

Les bras racleurs imprimant un mouvement rotatif alternatif, la surface du fond 3A du bassin peut être raclée de manière efficace, tout en autorisant la présence de supports fixes intermédiaires, ou de tout autre obstacle se trouvant sur le fond du bassin, entre le support fixe central et la paroi externe du bassin.

## Revendications

1. Décanteur (1) de séparation solide/liquide comportant :
- un bassin (3) de décantation comprenant un fond (3A) et au moins une paroi externe (3B), le fond (3A) et la paroi externe (3B) délimitant un volume de décantation (5) continu,
- une structure supérieure (30) disposée au-dessus du fond (3A),
- un racleur (33) s'étendant au moins en partie dans le volume de décantation (5), le racleur (33) comportant un organe d'entrainement en rotation monté rotatif autour d'un axe vertical de rotation (A-A'), le racleur (33) comprenant au moins un bras racleur (36) fixé à l'organe d'entrainement et faisant saillie radialement par rapport à l'axe vertical de rotation (A-A'),
- au moins un support fixe (50) de la structure supérieure (30) fixé à la structure supérieure (30), le ou chaque support (50) faisant saillie à partir du fond (3A) dans le volume de décantation (5) ;
**caractérisé en ce que** le ou chaque support (50) est décentré par rapport à l'axe vertical de rotation (A-A') et est positionné au moins en partie dans une enveloppe qui serait susceptible d'être balayée dans le volume de décantation (5) par l'au moins un bras racleur (36) en l'absence du ou de chaque support (50),
et **en ce que** le décanteur (1) comporte un système d'entrainement en rotation du racleur (33), configuré pour entrainer en rotation l'organe d'entrainement autour de l'axe vertical de rotation (A-A') alternativement dans un premier sens de rotation et dans un deuxième sens de rotation, opposé au premier sens selon un parcours angulaire défini (α), borné par le ou chaque support (50).

2. Décanteur (1) de séparation solide/liquide selon la revendication 1, dans lequel le ou chaque support (50) est situé à l'écart radialement de l'organe d'entrainement (34) et à l'écart radialement de l'au moins une paroi externe (3B) du bassin (3).

3. Décanteur (1) de séparation solide/liquide selon la revendication 1 ou 2, dans lequel, dans au moins une section dans un plan perpendiculaire à l'axe vertical de rotation (A-A'), le ou chaque support (50) est situé totalement à l'écart d'un contour périphérique du volume de décantation (5) continu.

4. Décanteur (1) de séparation solide/liquide selon l'une quelconque des revendications précédentes, dans lequel le décanteur (1) comprend un système motorisé (35) d'entrainement en rotation de l'organe d'entrainement (34) autour de l'axe vertical (A-A').

5. Décanteur (1) de séparation solide/liquide selon l'une quelconque des revendications précédentes, dans lequel la structure supérieure (30) comprend un organe de gestion du flux hydraulique ou une passerelle d'accès à un opérateur.

6. Décanteur (1) de séparation solide/liquide selon la revendication 5, dans lequel l'organe de gestion du flux hydraulique est choisi parmi un canal de circulation d'un fluide (42), un module lamellaire (40), et un organe de répartition et/ou de dissipation d'énergie.

7. Décanteur (1) de séparation solide/liquide selon l'une quelconque des revendications précédentes, dans lequel l'au moins un support (50) de la structure supérieure (30) est un pilier s'étendant selon une direction parallèle à l'axe vertical (A-A').

8. Décanteur (1) de séparation solide/liquide selon l'une quelconque des revendications précédentes, dans lequel le racleur (33) comprend au moins un organe de raclage (55) lié à l'au moins un bras racleur (36), le ou chaque organe de raclage (55) s'étendant entre l'arbre d'entrainement et l'au moins une paroi externe (3B) du bassin (3).

9. Décanteur (1) de séparation solide/liquide selon la revendication 8, dans lequel le racleur (33) comprend un nombre d'organes de raclage (55) compris entre 1 et 15 par bras racleur (36), de préférence supérieur à 2, espacés radialement les uns des autres le long du bras racleur (36).

10. Décanteur (1) de séparation solide/liquide selon la revendication 8 ou 9, dans lequel chaque organe de raclage (55) est configuré pour balayer un volume situé à l'écart et sans contact avec le ou chaque support (50) lors de l'entrainement en rotation alternatif du racleur (33).

11. Décanteur (1) de séparation solide/liquide selon l'une quelconque des revendications 8 à 10, dans lequel les organes de raclage (55) sont mobiles en translation selon une direction parallèle à l'axe vertical de rotation (A-A').

12. Décanteur (1) de séparation solide/liquide selon l'une quelconque des revendications précédentes dans lequel le fond (3A) du bassin (3) présente un contour circulaire, en projection dans un plan perpendiculaire à l'axe vertical de rotation (A-A'), la paroi externe (3B) du bassin (3) définissant une surface cylindrique.

13. Décanteur (1) de séparation solide/liquide selon l'une quelconque des revendications précédentes dans lequel le racleur (33) comprend un nombre de bras racleurs (36) au moins égal au nombre de support(s) (50) de la structure supérieure (30), les bras racleurs (36) étant agencés angulairement autour de l'arbre d'entrainement.

14. Décanteur (1) de séparation solide/liquide selon l'une quelconque des revendications précédentes dans lequel le parcours angulaire (α) en degrés du ou de chaque bras racleur est sensiblement inférieur à R, R étant égal à 360 divisé par le nombre de support(s) (50) de la structure supérieure (30) du décanteur (1).

15. Procédé de séparation solide/liquide, comprenant les étapes suivantes :
- amenée de fluide à clarifier (7) dans le volume (5) de décantation du bassin de décantation (3) d'un décanteur (1) solide/liquide selon l'une quelconque des revendications 1 à 14 ;
- mise en rotation de l'organe d'entrainement en rotation dans le premier sens ;
- entrainement de chaque bras (36) du racleur (33) en rotation dans le premier sens autour de l'axe de rotation (A-A') sur un parcours angulaire (α) jusqu'au voisinage du support (50) ;
- à l'extrémité du parcours angulaire (α), inversion du mouvement rotatif de l'organe d'entrainement en rotation pour mettre en rotation l'organe d'entrainement dans le deuxième sens opposé au premier sens ; et
- entrainement de chaque bras (36) du racleur (33) en rotation autour de l'axe de rotation (A-A') dans le deuxième sens.
